Europäisches Patentamt

European Patent Office

Office européen des brevets

(11) Veröffentlichungsnummer: **0 298 470 B1**

(12) **EUROPÄISCHE PATENTSCHRIFT**

(45) Veröffentlichungstag der Patentschrift: **19.11.92**

(51) Int. Cl.⁵: **C04B 35/56**, C08L 83/04

(21) Anmeldenummer: **88110848.4**

(22) Anmeldetag: **07.07.88**

Die Akte enthält technische Angaben, die nach dem Eingang der Anmeldung eingereicht wurden und die nicht in dieser Patentschrift enthalten sind.

(54) **Verfahren zur Herstellung von Formteilen auf Basis von Siliciumoxycarbid.**

(30) Priorität: **08.07.87 DE 3722602**

(43) Veröffentlichungstag der Anmeldung:
**11.01.89 Patentblatt 89/02**

(45) Bekanntmachung des Hinweises auf die Patenterteilung:
**19.11.92 Patentblatt 92/47**

(84) Benannte Vertragsstaaten:
**AT BE CH DE FR GB IT LI NL SE**

(56) Entgegenhaltungen:
**DE-A- 2 236 078**
**FR-A- 2 317 039**
**GB-A- 2 002 738**
**GB-A- 2 015 498**

(73) Patentinhaber: **WACKER-CHEMIE GMBH**
**Hanns-Seidel-Platz 4**
**W-8000 München 83(DE)**

(72) Erfinder: **Frey, Volker, Dr., Dipl.-Chem.**
**Jahnweg 5**
**W-8263 Burghausen(DE)**
Erfinder: **Pachaly, Bernd, Dr., Dipl.-Chem.**
**Robert-Koch-Strasse 167**
**W-8263 Burghausen(DE)**
Erfinder: **Zeller, Norbert, Dr., Dipl.-Chem.**
**Schweitzer Strasse 5**
**W-8263 Burghausen(DE)**

## Beschreibung

In der EP-A-107943 sind kohlenstoffhaltige monolithische Gläser beschrieben, die aus Gelen von Organosilsesquioxanen der allgemeinen Formel $RSiO_{3/2}$ erhalten wurden. Defektfreie Formteile sind nur durch aufwendige Trocknungsprozeduren erreichbar, wobei auch dann die Reproduzierbarkeit der Maße der Formteile nicht gegeben ist.

GB-A-200 27 38 offenbart ein Verfahren zur Herstellung von keramischen, gebrannten Körpern, die durch Zugabe eines linearen Organopolysiloxans als Additiv zu keramischen Pulvern wie beispielsweise SiC oder $SiO_2$ erhalten werden.

Es bestand die Aufgabe ein Verfahren zur Herstellung von defektfreien Formteilen auf Basis von Siliciumoxycarbid mit reproduzierbaren Maßen bereitzustellen unter Vermeidung von aufwendigen Trocknungs- und Verarbeitungsprozessen.

Gelöst wird diese Aufgabe durch ein Verfahren zur Herstellung von Formteilen auf Basis von Siliciumoxycarbid, das dadurch gekennzeichnet ist, daß ein Formteil, enthaltend 50 bis 90 Gew.-% Siliciumoxycarbid mit einer mittleren Teilchengröße von 0,5 bis 50 $\mu$m und 10 bis 50 Gew.-% Siliconharz der allgemeinen Formel

$$\{CH_3SiO_x(OR)_y(OH)_z\}_n \, ,$$

wobei R ein Methyl, Ethyl, iso-Propyl oder n-Butylrest sein kann und x im Bereich von 1,4 bis 1,5, y im Bereich von 0 bis 0,08, z im Bereich von 0 bis 0,08 und n im Bereich von 20 bis 40 liegt, unter nichtoxidierender Atmosphäre oder im Vakuum bei Temperaturen im Bereich von 700 bis 1500 °C umgesetzt wird.

Der bevorzugte Temperaturbereich beim erfindungsgemäßen Verfahren liegt im Bereich von 1000 bis 1300 °C.

Beim erfindungsgemäßen Verfahren tritt in Abhängigkeit von der gewählten Zusammensetzung des Formteils ein reproduzierbarer Volumenschrumpf von 5 bis 25 % auf, was für die Herstellung von Formteilen mit reproduzierbaren Maßen entscheidende Bedeutung hat. Der Gewichtsverlust beträgt 2,5 bis 10,0 %.

Die Umsetzung wird unter nichtoxidierender Atmosphäre, das heißt unter inerter Atmosphäre wie Stickstoff oder Argon oder unter reduzierender Atmosphäre wie Kohlenmonoxid oder Wasserstoff, oder im Vakuum durchgeführt. Das Aufheizprogramm muß der jeweiligen Problemstellung angepaßt werden und hängt im wesentlichen von Größe und Form des Formteils ab.

Die erfindunggemäß umgesetzten Formteile können Körper jeglicher Art wiedergeben, beispielsweise Platten, Stäbe, Rohre.

Die Formgebung der erfindungsgemäß umgesetzten Formteile erfolgt in an sich bekannter Weise durch Walzen, Pressen, Extrudieren, Spritzgießen, Blasformen, Gießen oder Streichen von thermoplastischen und gießfähigen Massen, enthaltend 50 bis 90 Gew.-% Siliciumoxycarbid mit einer mittleren Teilchengröße von 0,5 bis 50 $\mu$m und 10 bis 50 Gew.-% Siliconharz der allgemeinen Formel

$$\{CH_3SiO_x(OR)_y(OH)_z\}_n \, ,$$

wobei R ein Methyl, Ethyl, iso-Propyl oder n-Butylrest sein kann und x im Bereich von 1,4 bis 1,5, y im Bereich von 0 bis 0,08, z im Bereich von 0 bis 0,08 und n im Bereich von 20 bis 40 liegt.

Die Herstellung der thermoplastischen und gießfähigen Massen, enthaltend 50 bis 90 Gew.-% Siliciumoxycarbid mit einer mittleren Teilchengröße von 0,5 bis 50 $\mu$m und 10 bis 50 Gew.% Siliconharz der allgemeinen Formel

$$\{CH_3SiO_x(OR)_y(OH)_z\}_n \, ,$$

wobei R ein Methyl, Ethyl, iso-Propyl oder n-Butylrest sein kann und x im Bereich von 1,4 bis 1,5, y im Bereich von 0 bis 0,08, z im Bereich von 0 bis 0,08 und n im Bereich von 20 bis 40 liegt, erfolgt in an sich bekannter Weise durch Einrühren des Siliciumoxycarbids in eine Lösung des Siliconharzes mit anschließender Entfernung des Lösungsmittels durch Abdampfen, wobei Toluol oder Xylol bevorzugte Lösungsmittel sind, durch Einarbeiten des Siliciumoxycarbids in aufgeschmolzenes Siliconharz auf Walzen oder Knetern bei 60 bis 150 °C, gegebenenfalls unter Zusatz von Gleit- oder Plastifiziermitteln, wie Paraffinen, Polyglycolen oder Phthalaten oder durch Sprühgranulieren einer Lösung des Siliconharzes, wobei Toluol und Xylol bevorzugte Lösungsmittel sind, mit Siliciumoxycarbid in einem Wirbelschicht-Granulator.

Bevorzugte Zusammensetzungen der erfindungsgemäß umgesetzten Formteile enthalten 50 bis 80 Gew.-% Siliciumoxycarbid mit einer mittleren Teilchengröße von 0,5 bis 50 $\mu$m, vorzugsweise 0,5 bis 25 $\mu$m and 20 bis 50 Gew.-% Siliconharz der allgemeinen Formel

$$\{CH_3SiO_x(OR)_y(OH)_z\}_n \, ,$$

wobei R ein Methyl, Ethyl, iso-Propyl oder n-Butylrest sein kann und x im Bereich von 1,4 bis 1,5, y im Bereich von 0 bis 0,08, z im Bereich von 0 bis 0,08 und n im Bereich von 20 bis 40 liegt. Bevorzugter Rest R ist der Methylrest. Bevorzugte Bereiche für x, y, z und n sind:

x : 1,44 bis 1,46
y : 0,065 bis 0,070
z : 0,03 bis 0,04
n : 25 bis 35

Vorzugsweise wird sphärisches Siliciumoxycarbid mit einer mittleren Teilchengröße von 0,5 bis 25 μm, vorzugsweise 0,5 bis 15 μm verwendet.

Die Herstellung des verwendeten Siliciumoxycarbids erfolgt vorzugsweise durch Pyrolyse von pulverförmigen, unschmelzbaren und unloslichen Methylkieselsauren mit einer mittleren Teilchengröße von 0,7 bis 70 μm, vorzugsweise 0,7 bis 34 μm unter inerter Atmosphare oder im Vakuum bei Temperaturen im Bereich von 800 bis 1300°C, insbesondere 900 bis 1200 °C. Die Methylkieselsäuren werden in an sich bekannter Weise durch Hydrolyse von Methyltrichlorsilan oder $CH_3Si(OR)_3$ (mit R gleich Methyl, Ethyl oder Isopropyl) erhalten. Eine Übersicht uber bekannte Verfahren ist in W. Noll, Chemistry and Technology of Silicones, Academic Press Inc. Orlando 1968, gegeben. Insbesondere werden sphärische Methylkieselsäurepulver, die durch Sprühtrocknen von Hydrosolen aus $CH_3Si(OCH_3)_3$ gewonnen wurden, verwendet. Ein Verfahren zur Herstellung dieser sphärischen Methylkieselsäurepulver ist in der älteren Patentanmeldung mit der Anmeldenummer P 37 17 073.2 beschrieben.

Siliconharz der allgemeinen Formel

$$\{CH_3SiO_x(OR)_y(OH)_z\}_n \,,$$

wobei R ein Methyl, Ethyl, iso-Propyl oder n-Butylrest sein kann und x im Bereich von 1,4 bis 1,5, y im Bereich von 0 bis 0,08, z im Bereich von 0 bis 0,08 und n im Bereich von 20 bis 40 liegt, sind bekannte Verbindungen und durch herkömmliche Verfahren leicht zugänglich. Eine Übersicht über herkömmliche Verfahren ist gegeben in W. Noll, Chemistry and Technology of Silicones, Academic Press Inc. Orlando 1968.

Durch das erfindungsgemäße Verfahren werden defektfreie Formteile auf Basis von Siliciumoxycarbid mit reproduzierbaren Maßen erhalten unter Vermeidung von aufwendigen Trocknungsund Verarbeitungsprozessen. Die erfindungsgemäß hergestellten Formteile weisen eine Dichte von 1,8 bis 2,3 g/cm$^3$ und eine Porosität von 1 bis 20 % auf. Die elektrische Leitfähigkeit ist sehr gering. Sehr gut sind die thermische und chemische Beständigkeit sowie die Oxidationsbeständigkeit an Luft bis 1300 °C.

Die erfindungsgemäß hergestellten Formteile finden insbesondere Verwendung als Elemente in elektrischen Geräten, beispielsweise als Gehäuseteile, Träger für Wicklungen, Isolatoren, sowie als Bauteile für Hochtemperaturanwendungen, beispielsweise als Düsen, Schieber, Rohre und Rotoren.

Beispiel 1

Herstellung eines Hydrosols aus $CH_3Si(OCH_3)_3$

In ein Gemisch aus 1100ml Wasser und 6g Dodecylbenzolsulfonsäure wurden bei 65°C über einen Zeitraum von 30min 170g Methyltrimethoxysilan unter Rühren eingetropft. Nach 30min Rühren wurden bei 400mbar 250ml eines Methanol-Wasser-Gemisches abdestilliert. Dann wurden erneut 170g Methyltrimethoxysilan über einen Zeitraum von 30min bei 65°C eingetropft. Nach 30min Rühren wurden bei 400mbar 250ml eines Methanol-Wasser-Gemisches abdestilliert. Es bildete sich ein lagerstabiles, opakes Hydrosol mit 20% Feststoffgehalt, einem durchschnittlichen Teilchendurchmesser von 20nm und einer Viskosität von 25 mPa.s.

Beispiel 2

Herstellung eines Methylkieselsäurepulvers

Das nach Beispiel 1 hergestellte Hydrosol wurde durch Sprühtrocknung in einem Zerstaubungstrockner vom Typ Nubilosa AJM 014 (Nubilosa durfte ein registriertes Warenzeichen sein) bei 5bar Düsendruck, 170°C Lufteintrittstemperatur und 85°C Austrittstemperatur zu einem Methylkieselsäurepulver mit einer Restfeuchte von weniger als 0,8%, einer Stampfdichte von 300g/l, einer spezifischen Oberfläche nach BET von 360m$^2$/g und einer mittleren Sekundarteilchengröße von 3 micrometer umgesetzt.

Beispiel 3

Herstellung eines Siliciumoxycarbid-Pulvers

In einem mit Argon-Spülung ausgestatteten Kammerofen wurden 1000g des nach Beispiel 2 hergestellten Methylkieselsäurepulvers auf 1100°C aufgeheizt. Nach Abkühlung erhielt man 710g eines schwarzen Pulvers mit einer Schüttdichte von 483g/l und einer mittleren Sekundärteilchengröße von 2 micrometer.

Beispiel 4

Herstellung eines Siliciumoxycarbid-Formteils

Aus 100g eines nach Beispiel 3 hergestellten Siliciumoxycarbid-Pulvers, 40g eines Siliconharzes der Formel $(CH_3SiO)_{1,45}(OC_2H_5)_{0,064}(OH)_{0,033}$ und 100ml Toluol wurde durch Ultraschall-Behandlung ein homogenes Gemisch hergestellt. Anschließend wurde Toluol bei 150°C in einem Umlufttrockenschrank entfernt. Ein Teil der so erhaltenen Masse wurde in einem Preßwerkzeug bei 80°C und 10bar über 60min zu einem 60x10x5 mm großen Formteil gepreßt. Dieses Formteil wurde auf 1300°C in einem Argon-gespülten Röhrenofen aufgeheizt und 30min bei dieser Temperatur belassen. Nach Abkühlung wurde ein schwarzes, glattes, defektfreies Formteil erhalten. Der Volumenschwund betrug 20,7%, die Dichte 1,82 g/cm$^3$. Das Formteil war nicht elektrisch leitfähig, sehr temperaturwechselbeständig und zeigte eine Biegfestigkeit von über 150 N/mm$^2$. Nach Temperaturbehandlung bei 1000°C an Luft uber 10h zeigte sich keine Gewichtsveränderung.

## Patentansprüche

1. Verfahren zur Herstellung von Formteilen auf Basis von Siliciumoxycarbid, dadurch gekennzeichnet, daß ein Formteil, enthaltend 50 bis 90 Gew.- % Siliciumoxycarbid mit einer mittleren Teilchengröße von 0,5 bis 50 $\mu$m und 10 bis 50 Gew.-% Siliconharz der allgemeinen Formel

$$\{CH_3SiO_x(OR)_y(OH)_z\}_n,$$

wobei R ein Methyl, Ethyl, iso-Propyl oder n-Butylrest sein kann und x im Bereich von 1,4 bis 1,5, y im Bereich von 0 bis 0,08, z im Bereich von 0 bis 0,08 und n im Bereich von 20 bis 40 liegt, unter nichtoxidierender Atmosphäre oder im Vakuum bei Temperaturen im Bereich von 700 bis 1500 °C umgesetzt wird.

2. Verfahren nach Anspruch 1, dadurch gekennzeichnet, daß 50 bis 80 Gew.- % Siliciumoxycarbid eingesetzt werden.

3. Verfahren nach Anspruch 1 oder 2, dadurch gekennzeichnet, daß Siliciumoxycarbid mit einer mittleren Teilchengröße von 0,5 bis 25 $\mu$m eingesetzt wird.

4. Verfahren nach einem der Ansprüche 1 bis 3, dadurch gekennzeichnet, daß 20 bis 50 Gew.-% Siliconharz eingesetzt werden.

5. Verfahren nach einem der Ansprüche 1 bis 4, dadurch gekennzeichnet, daß sphärisches Siliciumoxycarbid mit einer mittleren Teilchengröße von 0,5 bis 15 $\mu$m eingesetzt wird.

6. Verfahren nach einem der Ansprüche 1 bis 5, dadurch gekennzeichnet, daß Siliciumoxycarbid, erhalten durch Pyrolyse von pulverförmigen, unschmelzbaren und unlöslichen Methylkieselsäuren unter inerter Atmosphäre oder im Vakuum bei Temperaturen im Bereich von 800 bis 1300°C, eingesetzt wird.

## Claims

1. Process for the production of mouldings based on silicon oxycarbide, characterised in that a moulding containing 50 to 90% by weight of silicon oxycarbide having an average particle size of 0.5 to 50 $\mu$m and 10 to 50% by weight of silicone resin of the general formula

$$\{CH_3SiO_x(OR)_y(OH)_z\}_n,$$

in which R can be a methyl, ethyl, isopropyl or n-butyl radical and x is within the range from 1.4 to 1.5, y is within the range from 0 to 0.08, z is within the range from 0 to 0.08 and n; is within the range from 20 to 40, is reacted under a non-oxidising atmosphere or in a vacuum at temperatures within the range from 700 to 1500°C.

2. Process according to Claim 1, characterised in that 50 to 80% by weight of silicon oxycarbide are employed.

3. Process according to Claim 1 or 2, characterised in that silicon oxycarbide having an average particle size of 0.5 to 25 $\mu$m is employed.

4. Process according to one of Claims 1 to 3, characterised in that 20 to 50% by weight of silicone resin are employed.

5. Process according to one of Claims 1 to 4, characterised in that spherical silicon oxycarbide having an average particle size of 0.5 to 15 $\mu$m is employed.

6. Process according to one of Claims 1 to 5, characterised in that silicon oxycarbide obtained by the pyrolysis of pulverulent, infusible and insoluble methylsilicic acids under an inert atmosphere or under a vacuum at temperatures within the range from 800 to 1300°C is employed.

## Revendications

1. Procédé pour fabriquer des objets moulés à base d'oxycarbure de silicium, procédé caractérisé en ce qu'on fait réagir un objet moulé qui contient de 50 à 90 % en poids d'un oxycarbure de silicium ayant une granularité moyenne de 0,5 et 50 $\mu$m et de 10 à 50 % en poids d'une résine siliconique répondant à la formule générale :

$$-(CH_3SiO_x(OR)_y(OH)_z)_n-$$

dans laquelle R représente un radical méthyle, éthyle, isopropyle ou n-butyle, x désigne un nombre compris entre 1,4 et 1,5, y un nombre compris entre 0 et 0,08, z un nombre compris entre 0 et 0,08 et n un nombre compris entre 20 et 40,

dans une atmosphère non oxydante et sous pression réduite, à des températures comprises entre 700 et 1.500°C.

2. Procédé selon la revendication 1 caractérisé en ce qu'on utilise de 50 à 80 % en poids d'oxycarbure de silicium.

3. Procédé selon l'une des revendications 1 et 2 caractérisé en ce qu'on utilise un oxycarbure de silicium ayant une granularité moyenne comprise entre 0,5 et 25μm.

4. Procédé selon l'une quelconque des revendications 1 à 3, caractérisé en ce qu'on utilise de 20 à 50 % en poids de la résine siliconique.

5. Procédé selon l'une quelconque des revendications 1 ou 4, caractérisé en ce qu'on utilise un oxycarbure de silicium à particules sphériques qui a une granularité moyenne de 0,5 à 15μm.

6. Procédé selon une quelconque des revendications 1 à 5, caractérisé en ce qu'on utilise un oxycarbure de silicium que l'on a obtenu par pyrolyse d'acides méthyl-siliciques pulvérulents, infusibles et insolubles, sous une atmosphère inerte ou sous pression réduite, à des températures comprises entre 800 et 1300°C.